(19) Europäisches Patentamt
European Patent Office
Office européen des brevets

(11) **EP 2 236 818 B1**

(12) **EUROPEAN PATENT SPECIFICATION**

(45) Date of publication and mention
of the grant of the patent:
**04.12.2013 Bulletin 2013/49**

(51) Int Cl.:
***F03D 3/06*** (2006.01)

(21) Application number: **08839186.7**

(22) Date of filing: **16.10.2008**

(86) International application number:
**PCT/IB2008/054249**

(87) International publication number:
**WO 2009/050663 (23.04.2009 Gazette 2009/17)**

(54) **DRIVING FORCE GENERATING DEVICE**

ANTRIEBSKRAFTERZEUGUNGSVORRICHTUNG

DISPOSITIF GÉNÉRATEUR DE FORCE MOTRICE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **16.10.2007 ES 200702708**

(43) Date of publication of application:
**06.10.2010 Bulletin 2010/40**

(73) Proprietor: **Domenech Barcons, Salvador
08011 Barcelona (ES)**

(72) Inventor: **Domenech Barcons, Salvador
08011 Barcelona (ES)**

(74) Representative: **Oficina Ponti, SLP
C. Consell de Cent, 322
08007 Barcelona (ES)**

(56) References cited:
**WO-A-2005/072184        GB-A- 1 518 151
MD-A- 20 050 135          US-A- 4 293 274
US-A1- 2004 061 337       US-B1- 7 241 105**

**Description**

The present invention refers to a device for generating driving force, and particularly to a generator of driving force that use the energy of a fluid flow.

BACKGROUND OF THE INVENTION

The objective of the traditional devices for generating driving force, such as mills, rotors and turbines, is to use the dynamic energy that concentrate air, water and other fluids to generate mechanical and electromotive forces. The force that these devices can produce depends on the volume, mass and velocity of the fluids they operate with, so that it increases or decreases directly with the scale, i.e. the flap or cross area, and it depends at cube with respect to the velocity of the operating fluid.

This fact explains that, even though the mills and turbines have been used from long time ago, its operation was based on exploiting flows with high energy (water falls, windy zones). Consequently, the progress can be measured in terms of increase of the quantity and size of the installations, and the efficiency improvements are relatively recent and the application of their results is limited.

The objectives to improve the profit of the energy has to face multiple difficulties, among which are important determinant factors of dynamic, mechanical and electric nature:

- when the flow hits on an interposed object a decrease of its velocity and an outwardly deviation to surround the object are produced;
- the resistance to the advance of the interposed mobile increases more than proportionally with respect to its velocity, so that the mobile velocity is kept under the velocity of the fluid that drags it, or the phenomena of suspension or planning are instable;

- the interaction of the three thrust forces (flow, gravity and inertia) varies along the rotation cycles, producing considerable stresses and premature wear of the assembly;
- the rotation engagement of the turbine with the driving axis needs an increase of the torque and the secure limits are kept below the empirical possibilities of the design with the help of devices for varying the pitch and brake;
- the retention that the blades or vanes that are not suitably oriented in the flow produces undesired levels of vibration and noise, and it increases the breaking risks by overpressure or resonance;
- the variability of flow and the intrinsic unbalances difficult the use of the obtained current and they need, to be connected with the mains, sophisticated and also fragile equipments that can carry out the measurement and compensation of differences.

Something that all the apparatuses share is the need of limiting the rotation velocity not to exceed the maximum efforts that they are designed for. In some cases this is obtained thanks to the cinematic resistances inherent to the design, which increases the consequent risk that the assembly breaks or literally blow away. In other cases, they are brake devices or pitch fault devices with respect to the suitable one, so the efficiency decreases very quickly from the optimal efficiency. In practice, it is usual that the design is closely related with a determined condition, so that the intensity and direction variations over the ideal conditions are translated into outstanding efficiency loses.

Common and representative examples of application and enhancement of the known traditional technologies are the windmills with several blades with horizontal rotation, the turbines of multiple vanes or bowls in line with the working flow of Francis (1849) or Pelton (1879) kind, and the turbines with vertical rotation with no means for guiding the working flow of Savonius (US-1,697,574) and Darreius (US-1,835,018). To these classical inventions it can be added those of Kaplan (US-1,822,778), Yen (US-4,070,131), Seki (US-4,247,252), Gilman (US-4,293,274), Gorlov (US-5,451,137), Giorgini (US-5,852,331), Elder (US-6,538,340) and Becker (US-7,132,760), in which it is experimented the two-dimensional curvature of the vanes to obtain a better efficiency. More recent are the inventions of Sidler (WO 2005/010353 A2) or Naskali (WO 2006/119648 A1) in which the Savonius and Darreius models are respectively enhanced using also a movement or curvature in the vertical dimension (axis z). All these apparatuses are based in a Euclidian conception of the three-dimensional space, and even though some of them already disclose a helical design, all provide geometries of fixed or hinged kind at convenience, and none of them provides a continuously variable geometry and isometric as in the present invention.

It has been demonstrated empirically that it is possible to obtain increasing yields from the rest situation when the ratio between the tangential velocity of the vanes and the velocity of the fluid increases ("tip speed ratio") up to a theoretic maximum efficiency that depends on the fluid. For this reason an important investigation line is directed to enhance this relation. In the case of air according to the Betz's theory, this efficiency maximum is of 59.26%.

In general, the measurements of the actual operation of any kinds of wind turbines designs cannot exceed the 60% of Betz's limit. The classical mills with a plurality of blades have about 15%-20%, and modern wind generators with two or three blades of a great size have an optimal efficiency of about 45% with velocity ratios above 3 times.

Developments based on the previous cited ones keep their rotation at lower velocity ratios with an efficiency of about 20-30%. There are no data about the yield of the most recent invention, apart from that any rotors of the Darreius kind have registered efficiencies of about 30-35% with velocity ratios higher than 5 times.

The cost for starting and keeping this velocity ratio associated with mechanical stress problems due to the different action of the gravitational and centrifugal forces with high velocity ratios can be reasons for not prospering their commercial exploitation.

US4293274A, discloses a wind turbine for converting wind forces into usable energy has a main shaft rotatably mounted in the axis of rotation for the wind turbine, and a pair of coacting complementary longitudinally extending vane members are connected to each other by a plurality of support and transmission assemblies in the form of articulated members and to the main or driven shaft for driving engagement thereof.

US7241105B1 discloses a turbine that includes a substantially vertical shaft, at least two vane supports mounted by the shaft and at least two vertically collapsible material vanes supported by the vane supports, so that the vanes are movable from a first operative position in which the vane material is substantially taut, to second inoperative position in which the vane material collapses.

Therefore, it is apparent that it is a wide margin for improvements, not only in conceptual terms, but also with the search of more stable structural geometries and the use of new materials and techniques. In this sense, the use of more efficient designs or comparatively more light and cheap can provide an important advance, because the most important condition for the feasibility of the projects is the profitability, i.e. their cost according to the obtained production.

SUMMARY OF THE INVENTION

With the device of the invention said drawbacks can be solved, presenting other advantages that will be described.

The device for generating driving force of the present invention is defined by claim 1.

Preferably the base is rotatable about said column.

According to a preferred embodiment, the base is formed by several radial rods.

Advantageously, the positive rotating thrust in a direction is obtained because the membranes are polygonally placed adopting spiral persecution patterns.

Also advantageously, the control of this rotating thrust is obtained changing the geometry of that spiral arrangement.

The shape of said membranes is based preferably in sections of revolution surfaces wound or contracted in spiral patterns and/or in sections of isometric surfaces developed or expanded superposed with revolution bodies.

The shape of said membranes (3) could be defined by the following equations:

$$x = s*[sinh(v)*cos(t*u)] / [1+cosh(u)*cosh(v)]$$

$$y = s'* [sinh(v)*sin(t*u)] / [1+cosh(u)*cosh(v)]$$

$$z = [cosh(v)*sinh(u)] / [1+cosh(u)*cosh(v)]$$

wherein:

- x, y, z are spatial coordinates;
- u is a parameter of vertical increase;
- v is a parameter of horizontal increase;
- t is a torsion value; and
- s, s' are scale factors.

Preferably, said aerodynamic membranes are made from at least a thermoplastic polymer.

According to a preferred embodiment, said aerodynamic membranes are made from a thermoplastic polymer chosen from ethylene polyterephthalate (PET), and high-modulus polyethylene fibres (HMPE), aromatic polyamides (PPTA, TLPC), polyurethane (PBO), glass (GRP) or carbon (CRP).

The present invention has several advantages with respect to the current devices:

- - it balances the kinetic, gravitational and centrifugal forces, minimising the resistances;
- - it admits several incident angles and direction and intensity variations;
- - it keeps its efficiency with low, medium and high velocity ratios;

- - it permits to change the membranes for a wider operation spectrum;
- - it uses flexible vanes, reducing the effect of possible crashes;
- - it can be hold by an end, o it can be kept suspended or floating;
- - it has a minimal environmental impact, and it permits to reproduce varied patterns.

Furthermore, the present invention does not have any of the drawbacks of the current designs:

- - as the membranes are superposed, it requires comparatively a lower beating area;
- - it does not use deflectors and other accessories to direct or concentrate the flow;
- - its geometry (attack angle, exit, winding, pitch) changes interacting with the flow;
- - it does not use rigid blades or profiles, preventing problems due to mechanical stress;
- - it is not started nor kept in rotation for its operation;
- - it relieves an excessive flow pressure transforming its shape.

BRIEF DESCRIPTION OF THE DRAWINGS

For a better understanding of what has been exposed some drawings are attached in which, diagrammatically and only as a non-limitative example, a practical case of embodiment is shown.

Fig. 1 is an elevation view of the device of the present invention in it torsion variant;
Figs. 1b and 1c are plan views of the device of the present invention in its torsion variants;
Fig. 2 is an elevation view of the device of the present invention in its expansion variant;
Figs. 2b and 2c are plan views of the device of the present invention in its expansion variant;
Figs. 3a-3d are diagrammatical elevation views of the shape of the membranes in its torsion variant;
Figs. 4a-4d are diagrammatical elevation views of the shape of the membranes in its expansion variants;
Figs. 5a-5d are diagrammatical elevation views of the shape of the membranes in its torsion and expansion variants;
Fig. 6 is a diagrammatical view of the use of the device of the present invention as terrestrial generator;
Figs. 7a and 7b are diagrammatical views of the use of the device of the present invention as generator in the sea, floating and submerged, respectively;
Fig. 8 is a diagrammatical view of the use of the device of the present invention as penetrating driving system;
Fig. 9 is a diagrammatical view of the use of the device of the present invention as rotor in line with the flow; and
Figs. 10a and 10b show polynomial, punctual and lateral pursuit geometries, respectively; and
Figs. 10c and 10d show distribution patterns.

DESCRIPTION OF A PREFERRED EMBODIMENT

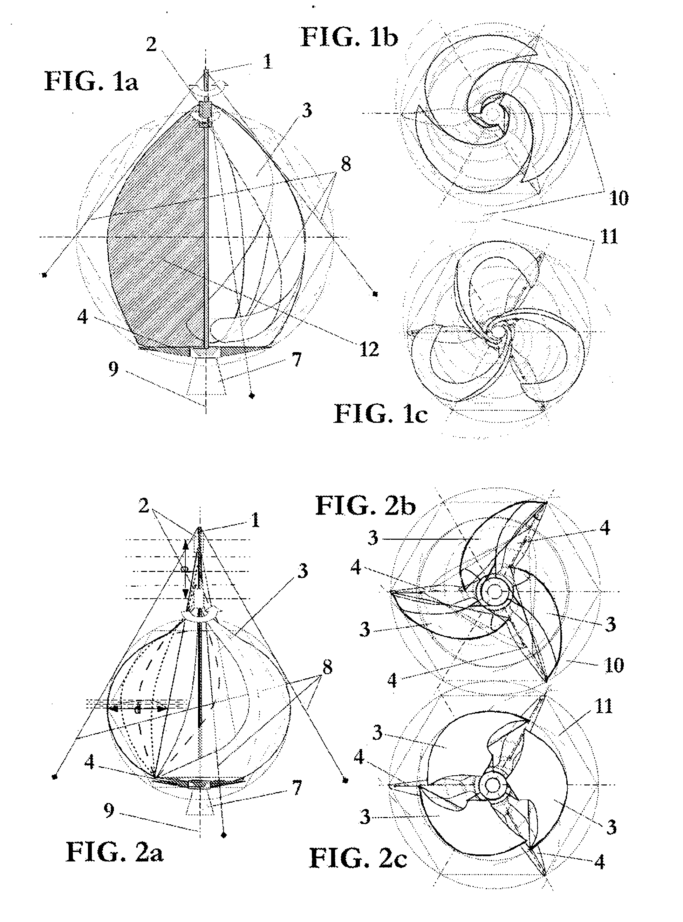

The device of the present invention comprises a column 1 that is sized to hold the element assembly that form the device and to transmit motive power to rotating radial rods 4 placed at the lower part of the column 1.
This column 1 comprises a head 2 that is rotatable about the column 1 and movable along said column 1.
The device of the present invention also comprises a plurality of flexible, aerodynamic membranes 3, that are joined, each one, by its upper end to said head 2 and by its lower end to one of said radial rods 4.
The movement of the head 2 and of the radial rods 4 facilitated the continuous and isometric transformation of the membranes 3, whose winding results in revolution geometries of catenary kind.
Controlling the positioning of the head 2 and the membranes 3 the thrust forces (flow, gravitational, centrifugal and friction) are affected, from which interaction results a rotating component and another one according to the transformation. The best dynamic shape and the best composition of the membranes and profiles of the elements for the prevailing work conditions and requirements are determined with the aid of a computerised analysis.
The use of the similarity asymmetries that are shown in Figs. 1, 2 and 3 are based in contemporaneous studies: Hambidge in 1920 explains the elements of the dynamic symmetry and provides methods for reproducing natural proportions in the design, the construction and the art. The studies of Weyl (1952) provide the possibility of their exact mathematical treatment defining two transformations of the plane similarity (dilatation and rotation) and to establish the ratio between said transformations and their corresponding spatial isometries (expansion and torsion). Bryant (1987) analyses the representation of surfaces of constant medium curvature in the three-dimensional hyperbolic space according to the study models of minimum surfaces in the Euclidian space. The reinterpretation of the surfaces of constant medium curvature and equal to one as revolution objects is due to Small (1994) and to other more recent contributions.

The main dynamic symmetrical element is the logarithmic spiral (equiangular or geometric). The logarithmic spiral satisfies the condition of uniform movement, being the only planar curve where the tangent in each point crosses its vector radius always with the same angle ($\alpha$), which is proportional to the natural logarithm of the vector radius and for $\alpha$ = 90° it is reduce to a circle. Its polar equation is $\rho = a*e^{k\theta}$, being k the cotangent of the constant polar tangential angle ($\alpha$).

The present invention uses the equivalency of dilatation actions and the rotation with the same centre to obtain always the best suitable aerodynamic angle.

From the point of view of dynamic symmetry, it has an especial interest the invariant condition of a logarithmic spiral with respect to some similitude transformations. This property of auto-similarity is kept in the several translation and torsion isometries applied on the membranes 3, whose points show the dilatation and the rotation in the form of a characteristic additive increase and winding, that make possible the spirals to be superposed on any revolution body defined by the rotation of a straight or curve line with origin at the spiral symmetry centre.

The conical rods and the bodies made by the catenary curves provide the required stability to the assembly, because they balance always the stresses that the thrust, friction, gravitational and centrifugal forces exert over the membranes.

The reason because none of the known developments can result in a variable geometry is that some obviate the consideration of the needed curvature and others remit to a two-dimensional curvature using constant pitch spirals, of polar equation $\rho^m = a^m*\theta^n$, as the Archimedian (m = n = 1), parabolic (m = 2, n = 1) or Galilean (m = 1, n = 2), to which their hyperbolic (m = 1, n = -1) or lituusian (m = 2, n = -1) inversions could be assimilated. Consequently, the variations and hybridations of the apparatuses that treated with any three-dimensional curvature yet use the known planar, conical or spherical helicoids, which result from the three-dimensional extension of these spirals of constant pitch.

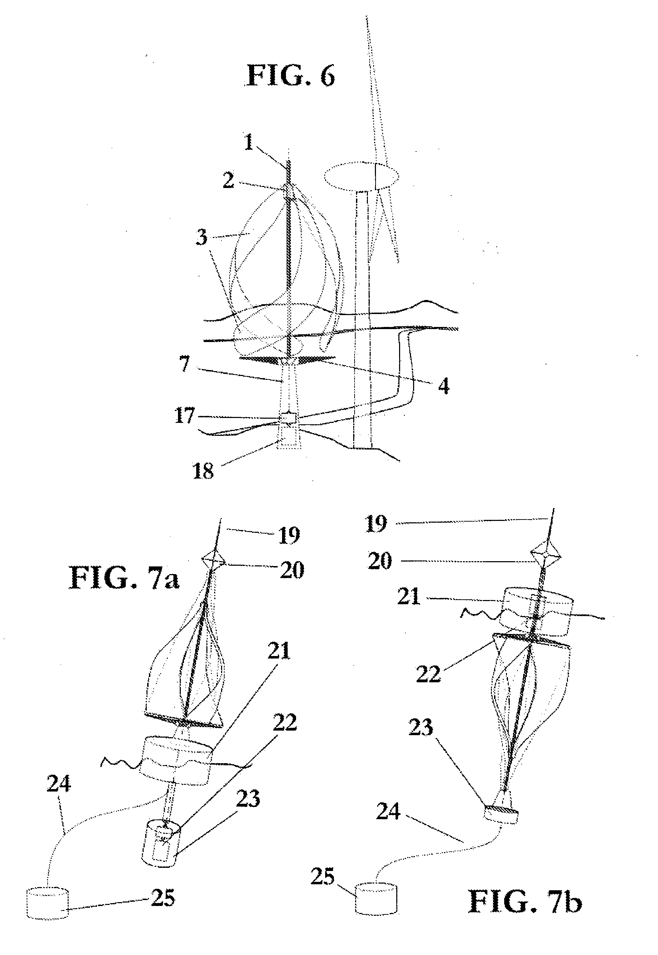

Figs. 6-10 simulate the use of the apparatuses based in surfaces of medium constant curvature of the hyperbolic space instead of the traditional helicoids of constant pitch for a better use of the power concentrate in the flows. As it will be described hereinafter, it provides the possibility of conception of high polyvalence apparatuses and also other ones that are closely related with a determined condition. The use of geometries of polygonal search or persecution that result in logarithmic spirals permits to determine geometries of fixed kind with a performance similar to that of the Euclid ones previously described. This permits the fixed disposition of the assembly on the best transition zone between the drag and the suspension, favouring those cases in which the simplicity predominates over efficiency. In such a case, the transformation is seen as a releasing mechanism of the charges that could exceed the design parameters.

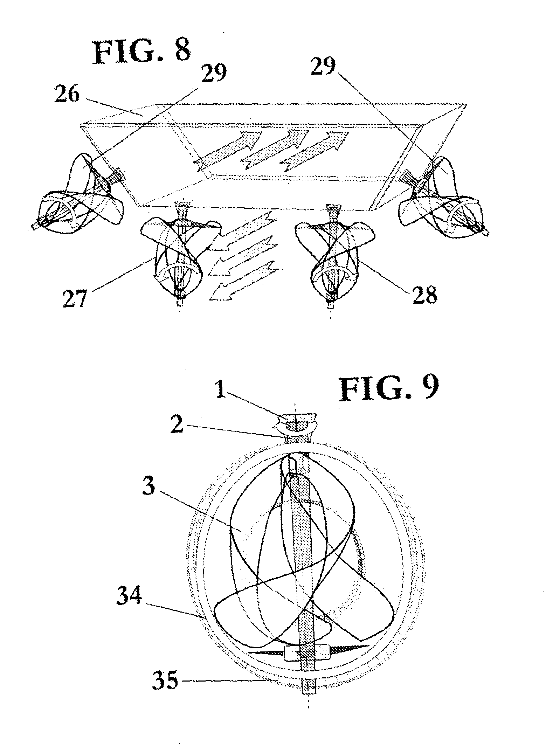

Fig. 8 shows how these principles of dynamic symmetry and polygonal persecution are exploited by the present invention to place several apparatuses in the space. To obtain the maximum profit of its features of no-directionality and multiple axis patterns of philotactic and fractal recurrence are adopted, and as possible patterns preference is given to those determined by aureal proportions and Fibonnaci series.

The components of the invention cited in the description can be identified in Figs. 1a-1c and 2a-2c. In these figures, column 1 is shown held at its lower part by a base 7 and at its upper part by an assembly of ropes 8 by needle bearings or another radial-axial bearing.

This column 1 in its basic configuration comprises the head 2, the membranes 3 and the assembly of radial rods 4 previously cited, that constitutes a driving axis, indicated by reference numeral 9.

This column 1 can be made from metal (steel, aluminium, etc.) or composed resins (glass fibre, aramid, carbon, etc.), the weight per lineal meter and the inertia to the torsion of its section in the diameter plane (x, y) being determinant for the material that is chosen.

Other possible configurations with fixed mast are also possible, using different joining and drive transmission elements between the head 2, the membranes 3 and the radial rods 4 and the driving axis 9.

In this case, the column can be strutted with the minimum profile, about which the head 2, the membranes 3 and the radial rods 4, joined by one or more cords, cables, axis or bars the cross them longitudinally as elements that transmit the driving force, rotate.

The head 2 and the radial rods 4 have the essential mission of holding the vertexes of the membranes 3, permitting its coordinated spatial movement.

The head 2 is constituted by a cylinder or ring made from metal or composed resin, that in its basic version provides holding points for the upper vertexes of the membranes 2, or for the cords or cables that keep these vertexes of the membranes 3 in this position, permitting the sliding and concentric rotation of the upper vertexes of the membranes 3 on the column.

The positioning of the head 2 can be done by different mechanisms, which are different according to the desired dimension and precision: from element spring and mass systems to sophisticated assemblies with absolute rotating coder and servomotor, using a series of related pneumatic, hydraulic o electric drivers, which permit to balance the upper vertexes of the membranes 3 with the lower vertexes of the membranes 3.

The radial rods 4 can be made from metal or composed resin, which in its basic version only provide holding points of the lower vertexes of the membranes 3 or of the cords or cables that keep these lower vertexes of the membranes 3 in this position, permitting the concentric rotation of the lower vertexes around the column at a radial distance greater or equal to that of the upper vertexes.

The movement of the radial rods 4 permits the total adjustment of the position of the membranes 3 according to the requirements of each situation, distributing evenly the required stress along its surface.

The membranes 3 constitute essential elements for the invention. Its manufacturing must adhere strictly to the design parameters of stress and shape, and among other features, they must permit the similarity transformations overcoming the physical determinants of flexure and fade of the rigid aerodynamic profiles.

To this end, they must keep a double condition of stress and flexibility directions in those of transformation. This can be obtained by monolithic, yarn or fabric materials, which are united, laminated or stratified with the aid of pressure and temperature.

The three-dimensional modelling of the membranes is done from surface sections of medium curvature parent of catenoids or from which result the logarithmic-spiral winding of isometric surfaces, which are optimised for the dynamic performance by analysis models of finite elements (FEA) and computation of fluid dynamics (CFD).

Even though in principle any natural or synthetic material adaptable to the shape of a three-dimensional mould that meets the previous conditions and it is also suitable according to other factors such as the resistance to the environmental exposure and the external or finishing aspect, in its industrial application the demanding requirement of resistance and weight of its manufacturing leads to choose determined thermoplastic polymers, among which there are ethylene polyterephthalate (PET), and high-modulus polyethylene fibres (HMPE), aromatic polyamides (PPTA, TLPC), polyurethane (PBO), glass (GRP) or carbon (CRP).

The geometry of the membranes varies according to the different interactions of the forces in which the desired transformations effects are obtained by the action of the head 2 and the radial rods 4.

These transformations seek to obtain the greatest quantity of power possible that transports the flow when it falls on the concave side of each one of the membranes, directly or by deflect towards the hidden area (drag), and also by effect of the suction on the convex side (sustentation). From this situation it is obtained a tangential resultant that feeds the rotation effect, and another normal resultant according to the increase of velocity to help with the transformation, with the limits that are established according to the design parameters.

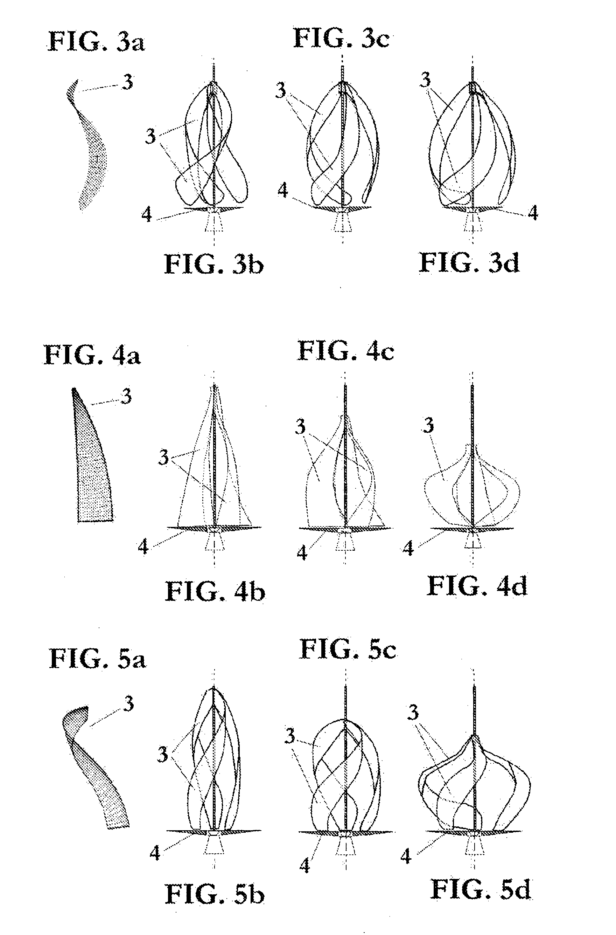

To make its description easier, these interactions and their corresponding kind models are classified in three variants: Kind "A", torsion without expansion (Figs. 1a-1c and Figs. 3a-3d); Kind "B", expansion without expansion (Figs. 2a-2c and Figs. 4a-4d); Kind "C", expansion and torsion (Figs. 4a-4d). To these models is added an effective possibility with neither expansion nor torsion, assimilated to a fixed geometry of kind "B" placed in the best transition between the predominance of the drag and the sustentation of the membranes.

Figs. 1a-1c shown the geometry and the components of the model kind "A", in which the stable position is obtained by torsion.

In Fig. 1a it can be seen the transformation of one of the membranes 3 as consequence of the change of the relative position of its upper vertex with respect to the lower ones by influence of the advancement or backward movement of the head 2.

Both situations correspond to the views shown in Figs. 1b and 1c, in which the assembly is superposed to delimitation 10 and growing 11 spirals, that are formed when they wind around the revolution figure defined by the shadow area 12 shown in Fig. 1a.

The generatix curve is of catenary kind, resulting from the deformation exerted by the gravitational and centrifugal forces on the walls of a three-axes ovoid. The limits to the transformation are given by the delay of the head (-t) and the upper vertex overlapping (s).

Figs. 2a-2c show the geometry and the components of the model kind "B", in which the stable position is obtained by expansion. In Fig. 2a it can be seen the transformation of one of the membranes 3 as consequence of the relative position change of its upper vertex with respect to the lower ones by the influence of the upward or downward movement of the head.

Both situations correspond to Figs. 2a and 2c, in which the assembly is superposed to the delimitation 10 and growing 11 spirals that are formed when they wind around the revolution figure. The generatrix curve is of catenary kind, resulting from the deformation exerted by the gravitational and centrifugal forces on the walls of a three-axes spheroid.

In these figures, the downward movement of the head 2 is translated into an increase equal to the horizontal radius. The limits to the transformation are provided by the resistance of the traction system, the overlapping of the lower vertexes and the dilation of radius d.

Figs. 3a-5d show the shape of the membranes 3 of models "A" (Fig. 3a), "B" (Fig. 4a) and "C" (Fig. 5a) in their different drag (Figs. 3b, 4b and 5b), transition (Figs. 3c, 4c and 5c) and suspension (Figs. 3d, 4d and 5d) positions.

Generally, any isometric shape can be used, whose winding provides another surface with a constant medium curvature equal to one.

For the determination of the base shape of the membranes of Figs. 3a-5d the hyperbolic surface defined by the following equations has be used:

$$x = s*[\sinh(v)*\cos(t*u)] / [1+\cosh(u)*\cosh(v)]$$

$$y = s'*[\sinh(v)*\sin(t*u)] / [1+\cosh(u)*\cosh(v)]$$

$$z = [\cosh(v)*\sinh(u)] / [1+\cosh(u)*\cosh(v)]$$

wherein:

- x, y, z are the spatial coordinates;
- u is a vertical increase parameter;
- v is a horizontal increase parameter;
- t is a torsion value; and
- s, s' are scale factors.

In the test model, the angle of the attack and exit edges of the profiles of the membranes has been modified in $\pm \pi/4$, to obtain aerodynamic yield. The refinement of the performance is obtained by computer analysis of fluid dynamics (CFD).

Figs. 6-10 simulate the use of turbines of kind "A", "B" and "C" in different applications.

Fig. 6 simulates the application as terrestrial aerogenerators. In this application, the device of the present invention comprises at its base a differential 17 and a generator 18.

Figs. 7a and 7b show the application of the device of the present invention for electric generation floating and submerged.

In this case, the device of the present invention comprises a floating wrap 21 and an additional counterweight 23 above the generator 22, which guarantees the stability.

A conductor cable extends with the anchoring line 24, which joins it with a dead body 25. This device includes a lightning conductor antenna 19 and a radio-buoy or a radar reflector 20.

In Fig. 8 is shown an application of the device of the present invention as penetrating driving system. In this case, the ship 26 uses a device of the present invention as right-hand turbine 28 and another device of the present invention as left-hand turbine 27 to trap the flow and project it in the direction opposed to that of the movement. Some devices of the present invention used as lateral turbines 29 act as auxiliary stabilizers or drivers for manoeuvres.

In Fig. 9 is shown an application of the device of the present invention as rotor in line with the flow. The rotation velocity of the membranes 3 is regulated by the interaction of the column 1 with the head 2. A seating layer 34 inside an expansion chamber 35 contributes to minimize the friction and to reduce the leaks.

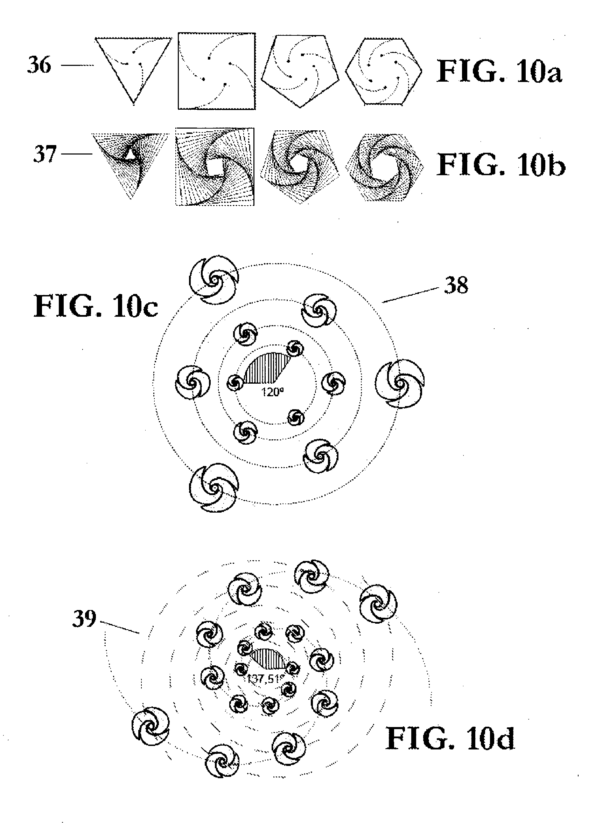

Finally, Figs. 10a and 10b show polynomial persecution geometries of n number of elements with n = 3, 4, 5 y 6. Both punctual 36 and lateral 37 persecutions determine logarithmic spirals with angle $\alpha = (n-2)\pi/2n$, in this case 30°, 45°, 54° y 60°.

Figs. 10c and 10d show patterns suitable for the spatial distribution of multiple apparatuses. The fractal pattern on the left side 38 is based on the even separation of concentric circles ($\alpha = 90°$) of m elements in the same node; the angle among them is $\beta = 2\pi/m = 120°$ for m = 3. The pattern in the right side 39 permits a greater density. It is based in the increased separation of 2 elements axially opposed, which are placed in aureal proportion ($\beta = 2\pi/\varphi^2 \approx 137,51°$) on spirals with angle $\alpha = 85°$.

Even though reference is made to several specific embodiments of the invention, it is apparent for a person skilled in the art that the device described is susceptible of numerous variations and modifications, and that all the details cited can be substituted by other technically equivalent ones, without departing from the scope of protection defined by the attached claims.

**Claims**

1. Device for generating driving force, comprising a column (1) provided with a plurality of flexible elements (3) placed around said column (1), that when they are interposed to a flow react positively rotating around in the same direction, said flexible elements (3) being aerodynamic membranes (3) whose positioning and shape follows spiral patterns and it comprises a movable head (2) placed at the top of said column (1) and a base (4) placed at the bottom of said column (1), each membrane (3) being fixed at its top to said movable head (2) and at its bottom to said base (4), **characterised in that** the positioning and shape of said aerodynamic membranes (3) follow logarithmic spiral patterns and wherein said movable head (2) is rotatable and slidable about said column (1) changing his position with regard to said base (4), while said membranes maintain an aerodynamic shape.

2. Device for generating driving force according to claim 1, **characterised in that** the base (4) is rotatable about said column (1).

3. Device for generating driving force according to claim 1, **characterised in that** the base (4) is formed by several radial rods.

4. Device for generating driving force according to claim 1, **characterised in that** the positive rotating thrust in a direction is obtained because the membranes (3) are polygonally placed adopting spiral persecution patterns.

5. Device for generating driving force according to claim 4, **characterised in that** the control of this rotating thrust is obtained changing the geometry of that spiral arrangement.

6. Device for generating driving force according to claim 1, **characterised in that** the shape of said membranes (3) is based in sections of revolution surfaces wound or contracted in spiral patterns and/or in sections of isometric surfaces developed or expanded superposed with revolution bodies.

7. Device for generating driving force according to claim 1, **characterised in that** said aerodynamic membranes (3) are made from at least a thermoplastic polymer.

8. Device for generating driving force according to claim 7, **characterised in that** said aerodynamic membranes (3) are made from a thermoplastic polymer chosen from ethylene polyterephthalate (PET), and high-modulus polyethylene fibres (HMPE), aromatic polyamides (PPTA, TLPC), polyurethane (PBO), glass (GRP) or carbon (CRP).

**Patentansprüche**

1. Vorrichtung zum Erzeugen einer Antriebskraft, die eine Säule (1) aufweist, die mit einer Mehrzahl von flexiblen Elementen (3) versehen ist, die um die Säule (1) herum platziert sind und die, wenn sie in einem Fluss angeordnet sind, mit einer positiven Rotation in derselben Richtung reagieren, wobei die flexiblen Elemente aerodynamische Membranen (3) sind, deren Positionierung und Form Spiralmustern folgen, und sie weist einen an dem oberen Ende der Säule (1) platzierten beweglichen Kopf (2) und eine an dem unteren Ende der Säule (1) platzierte Basis (4) auf, wobei jede Membran (3) an ihrem oberen Ende an dem beweglichen Kopf (2) und an ihrem unteren Ende an der Basis (4) befestigt ist, **dadurch gekennzeichnet, dass** die Positionierung und Form der aerodynamischen Membranen (3) logarithmischen Spiralmustern folgen, und wobei der bewegliche Kopf (2) um die Säule (1) herum drehbar oder schiebbar ist, wobei er seine Position bezüglich der Basis (4) verändert, während die Membranen eine aerodynamische Form beibehalten.

2. Vorrichtung zum Erzeugen einer Antriebskraft gemäß Anspruch 1, **dadurch gekennzeichnet, dass** die Basis (4) um die Säule (1) herum drehbar ist.

3. Vorrichtung zum Erzeugen einer Antriebskraft gemäß Anspruch 1, **dadurch gekennzeichnet, dass** die Basis (4) durch mehrere radiale Stäbe gebildet ist.

4. Vorrichtung zum Erzeugen einer Antriebskraft gemäß Anspruch 1, **dadurch gekennzeichnet, dass** der in einer Richtung erfolgende positive Rotationsschub erhalten wird, da die Membranen (3) polygonal platziert sind und dabei spiralförmige Verfolgungsmuster annehmen.

**5.** Vorrichtung zum Erzeugen einer Antriebskraft gemäß Anspruch 4, **dadurch gekennzeichnet, dass** die Steuerung dieses Rotationsschubs erhalten wird, indem die Geometrie dieser Spiralanordnung verändert wird.

**6.** Vorrichtung zum Erzeugen einer Antriebskraft gemäß Anspruch 1, **dadurch gekennzeichnet, dass** die Form der Membranen (3) auf Abschnitten von Rotationsflächen, die in Spiralmustern gewickelt oder zusammengezogen sind, und/oder auf Abschnitten von isometrischen Oberflächen, die entwickelt oder ausgedehnt sind und dabei von Rotationskörpern überlagert sind, beruht.

**7.** Vorrichtung zum Erzeugen einer Antriebskraft gemäß Anspruch 1, **dadurch gekennzeichnet, dass** die aerodynamischen Membranen (3) aus zumindest einem thermoplastischen Polymer hergestellt sind.

**8.** Vorrichtung zum Erzeugen einer Antriebskraft gemäß Anspruch 7, **dadurch gekennzeichnet, dass** die aerodynamischen Membranen (3) aus einem thermoplastischen Polymer hergestellt sind, der aus Ethylenpolyterephthalat (PET) und Hochmodul-Polyethylenfasern (HMPE), aromatischen Polyamiden (PPTA, TLPC), Polyurethan (PBO), Glas (GRP) oder Kohlenstoff (CRP) ausgewählt ist.

**Revendications**

**1.** Dispositif de production d'une force motrice comprenant une colonne (1) munie de plusieurs éléments souples (3) placés autour de la colonne (1), qui, lorsqu'ils sont interposés dans un écoulement réagissent positivement en tournantautourdans la même direction, les éléments souples (3) étant des membranes aérodynamiques (3) dont lepositionnement et la forme suivent des motifs de spirale, et ils comprennent une tête mobile (2) placée à la partie supérieure de la colonne (1) et une base (4) placée à la partie inférieure de la colonne (1), chaque membrane (3) étant fixée à sa partie supérieure sur la tête mobile (2) et à sa partie inférieure sur la base (4), **caractérisé en ce que** le positionnement et la forme des membranes aérodynamiques (3) suivent des motifs de spirale logarithmique et dans lequel la tête mobile (2) peut tourner et coulisser autour de la colonne (1) en changeant sa position par rapport à la base (4), alors que les membranes maintiennent une forme aérodynamique.

**2.** Dispositif de production d'une force motrice selon la revendication 1, **caractérisé en ce que** la base (4) peut tourner autour de la colonne (1).

**3.** Dispositif de production d'une force motrice selon la revendication 1, **caractérisé en ce que** la base (4) est formée par plusieurs tiges radiales.

**4.** Dispositif de production d'une force motrice selon la revendication 1, **caractérisé en ce que** la poussée de rotation positive dans une direction est obtenue du fait que les membranes (3) sont placées de manière polygonale en adoptant des motifs de persécution de spirale.

**5.** Dispositif de production d'une force motrice selon la revendication 4, **caractérisé en ce que** la commande de cette poussée de mise en rotation est obtenue en changeant la géométrie de cet agencement de spirale.

**6.** Dispositif de production d'une force motrice selon la revendication 1, **caractérisé en ce que** la forme des membranes (3) est basée sur des tronçons de surface de révolution enroulés ou contractés en motifs de spirale et/ou des tronçons de surfaces isométriques développées ou agrandies superposées à des corps de révolution.

**7.** Dispositif de production d'une force motrice selon la revendication 1, **caractérisé en ce que** les membranes aérodynamiques (3) sont réalisées à partir d'au moins un polymère thermoplastique.

**8.** Dispositif de production d'une force motrice selon la revendication 7, **caractérisé en ce que** les membranes aérodynamiques (3) sont constituées d'un polymère thermoplastique choisi parmi le polyéthylènetéréphtalate (PET) et des fibres de polyéthylène à module élevé (HMPE), des polyamides aromatiques (PPTA, TLPC) du polyuréthane (PBO), une matière plastique renforcée de fibres de verre (GRP) ou de fibres de carbone (CRP).

FIG. 1b

FIG. 1a

2
1
3
8
4
9
7
12

FIG. 1c

10
11

FIG. 2b

3
4
4
3
4
10
11
3
4
3
3

2
1
3
8
4
9
7

FIG. 2a

FIG. 2c

FIG. 3a

FIG. 3c

FIG. 3b

FIG. 3d

FIG. 4a

FIG. 4c

FIG. 4b

FIG. 4d

FIG. 5a

FIG. 5c

FIG. 5b

FIG. 5d

# FIG. 6

## FIG. 7a

## FIG. 7b

FIG. 8

26    29    29

27    28

FIG. 9

1

2

3

34

35

36 — **FIG. 10a**

37 — **FIG. 10b**

**FIG. 10c**

38

120º

39

137,51º

**FIG. 10d**

**EP 2 236 818 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1697574 A, Savonius
- US 1835018 A, Darreius
- US 1822778 A, Kaplan
- US 4070131 A, Yen
- US 4247252 A, Seki
- US 4293274 A, Gilman
- US 5451137 A, Gorlov
- US 5852331 A, Giorgini
- US 6538340 B, Elder
- US 7132760 B, Becker
- WO 2005010353 A2, Sidler
- WO 2006119648 A1, Naskali
- US 7241105 B1